(19) Europäisches Patentamt / European Patent Office / Office européen des brevets

(11) **EP 3 581 915 A1**

(12) **EUROPEAN PATENT APPLICATION**

(43) Date of publication:
**18.12.2019 Bulletin 2019/51**

(51) Int Cl.:
**G01N 1/22** (2006.01)  **G01N 15/02** (2006.01)
**B01L 3/00** (2006.01)  **G01N 1/40** (2006.01)

(21) Application number: **18177020.7**

(22) Date of filing: **11.06.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AE Eindhoven (NL)**

(72) Inventors:
• **SU, Jing**
  **5656 AE Eindhoven (NL)**
• **KONG, Tao**
  **5656 AE Eindhoven (NL)**
• **ZHANG, Qiushi**
  **5656 AE Eindhoven (NL)**

(74) Representative: **de Haan, Poul Erik et al**
**Philips International B.V.**
**Philips Intellectual Property & Standards**
**High Tech Campus 5**
**5656 AE Eindhoven (NL)**

(54) **PARTICLE OR POLLEN SENSOR AND SENSING METHOD**

(57) A particle or pollen sensor comprises a flow channel, a size screening layer disposed adjacent the flow channel and comprising a plurality of size selection regions and a detection channel arrangement disposed adjacent the size screening layer for receiving particles which have passed through the size screening layer. Particles are detected in the detection channel arrangement at a plurality of detection locations each associated with one of the plurality of size selection regions. This provides a compact sensor which can be formed as a layered microfluidic device which enables a particle size distribution to be obtained in a simple and low cost manner.

FIG. 1

EP 3 581 915 A1

FIG. 2

**Description**

FIELD OF THE INVENTION

This invention relates to a method and apparatus for detecting pollen or other particles.

BACKGROUND OF THE INVENTION

It is well known that it is desirable to monitor pollution levels, such as particulate pollutants including pollen.

Pollen are important allergens that may have a serious impact on people's well-being. In addition, they are asthma triggers. To prevent or minimize human exposure, it is important to detect pollen to which humans maybe exposed. The information obtained can be used to prompt other actions, for example to vacuum clean the enclosure in which the sensitive person resides or to clean surfaces in such an enclosure. This may be performed automatically, or an alert may be provided to a user to perform the cleaning action manually.

Numerous methods have been utilized to quantify the number of pollen grains in a sample. Basically, these methods can be divided into two major categories: counting with the human eye, and automated pollen counting.

Various sensing devices are known for automated pollen counting, which for example provide a particle concentration level for particles below a certain size, or particles over a certain size, or within a size range. Laser-based optical particle sensing approaches are for example known based on optical scattering. Image processing techniques can also be used.

One way to distinguish between different types of particle such as pollen particles is to determine the particle size or particle size distribution. However, sensors for accurately determining size distribution information are expensive and generally only used in professional applications.

Some known pollen sensors, again based on optical detectors, are further configured to detect the polarization signatures of the scattered light from pollen. Such sensors can for example distinguish between different types of pollen and other dust by comparing the amount of scattered light and degree of polarization.

However, there are few standard methods that are user-friendly, inexpensive and reliable in real time reporting. Counting with the human eye visually does not require specialized tools other than microscopes but is very time-consuming. Automated pollen counting methods can be easy to use but the cost and reliability is a challenge for consumer applications.

For example, the laser based methods which detect pollen passing through a laser beam path require an expensive apparatus. Image processing methods could provide a relatively low cost solution but they do not enable a real time method.

Electronic measurement methods which are based on counting numbers of particles can be cost effective and enable real-time monitoring, for example using a sticky coating. However, this can result in a tendency to underestimate the true count. Also, detection based on counting numbers of particles does not provide information relating different pollen types, such as size distribution information.

There remains a need for a system and method which enables count number and size information to be obtained for pollen or other particles with increased reliability and with real time low cost monitoring.

SUMMARY OF THE INVENTION

The invention is defined by the claims.

According to an example in accordance with the invention, there is provided a particle or pollen sensor comprising:

a flow channel for receiving a flow containing particles or pollen to be sensed;
a size screening layer disposed adjacent the flow channel and comprising a plurality of size selection regions;
a detection channel arrangement disposed adjacent the size screening layer for receiving particles which have passed through the size screening layer; and
a particle detection arrangement for detecting particles in the detection channel arrangement at a plurality of detection locations each associated with one of the plurality of size selection regions.

This sensor design provides particle screening to perform a pre-filtering function of a particulate flow in a flow channel. The particles pass to a detection channel arrangement where detection takes place. This design can be formed as a compact device making use of microscale channels. Thus, the sensor preferably comprises a microfluidic device.

The size selection regions of the size screening layer are for example disposed along the direction of the flow channel and each comprise an array of openings. As the flow passes over the size selection regions, particles of suitable size enter the detection channel arrangement through the size screening layer. This may be achieved by hydrophilic attraction of the particles through the size screening layer into the detection channel arrangement.

The openings of one size selection region are preferably laterally offset with respect to the openings of each other size selection region. Thus, each size selection region is associated with one lateral portion of the flow channel.

This is of particular interest when the flow channel implements particle size separation into different lateral regions of the flow channel. In this case, the flow channel, by inertial migration effects, forms particles into size streams, and the size selection regions are then positioned to correspond to these streams. This provides more accurate size selection, so that two size filtering operations are effectively carried out.

The detection channel arrangement may comprise a single channel which is parallel with the flow channel, and the particle detection arrangement comprises a set of detection units disposed along the detection channel. Each detection unit will then measure a cumulative particle flow, and processing of the detection unit signals enables the different contributions to be derived. This provides a compact arrangement with a single detection channel.

In another arrangement, the detection channel arrangement comprises a set of detection channels, each extending across the flow channel, and the particle detection arrangement comprises a detection unit in each detection channel. The detection channels may be perpendicular to the flow channel. Each detection channel then provides the independent measurement of a particle count for one range of particle sizes.

The detection channel arrangement may be filled with a water solution and has a hydrophilic coating. The water solution attracts the particles from the flow channel through the size selection layer, so that the transfer of particles is essentially passive and relies on hydrophilic forces.

The detection channel arrangement may be filled with a water solution having a surfactant. The surfactant serves to prevent particles sticking together.

The size selection regions may comprise:

a first size selection region with openings having a size in the range 15 to 30$\mu$m;
a second size selection region with openings having a size in the range 30 to 45$\mu$m; and
a third size selection region with openings having a size in the range 45 to 60$\mu$m.

This provides one example of possible size ranges. A particle size distribution can then be obtained from the multiple detection signals. Of course other numbers of detection channels are possible as well as different size ranges.

The sensor may further comprise a pump for drawing gas along the flow channel. A microfluidic pump is preferably used, for taking a sample of the particulate medium being investigated.

A pump, such as another microfluidic pump, may also be provided for drawing fluid along the detection channel arrangement.

The particle detection arrangement for example comprises a resistance measurement arrangement for detecting a change in resistance when a particle passes the particle detection arrangement. This provides a low cost and compact detection mechanism.

The particle detection arrangement may instead comprise an optical detection arrangement.

The invention also provides a particle or pollen sensing method comprising:

receiving a flow containing particles or pollen to be sensed in a flow channel;
performing size screening using a plurality of size selection regions of a size screening layer;
receiving particles which have passed through the size screening layer in a detection channel arrangement; and
detecting particles in the detection channel arrangement at a plurality of detection locations each associated with one of the plurality of size selection regions.

BRIEF DESCRIPTION OF THE DRAWINGS

Examples of the invention will now be described in detail with reference to the accompanying drawings, in which:

Figure 1 shows in exploded form a particle or pollen sensor;
Figure 2 shows the device in assembled form;
Figure 3 shows flow control approaches to provide particle sorting by size;
Figure 4 shows the arrangement of Figure 1 in more detail and shows the three layers;
Figure 5 shows an alternative arrangement to that of Figure 4 in which the detection channel arrangement comprises a set of detection channels;
Figure 6 shows an example of detection signal when pollen passes past measurement electrodes; and
Figure 7 shows a particle or pollen sensing method.

DETAILED DESCRIPTION OF THE EMBODIMENTS

The invention provides a particle or pollen sensor which comprises a flow channel, a size screening layer disposed adjacent the flow channel and comprising a plurality of size selection regions and a detection channel arrangement disposed adjacent the size screening layer for receiving particles which have passed through the size screening layer. Particles are detected in the detection channel arrangement at a plurality of detection locations each associated with one of the plurality of size selection regions. This provides a compact sensor which can be formed as a layered microfluidic device which enables a particle size distribution to be obtained in a simple and low cost manner.

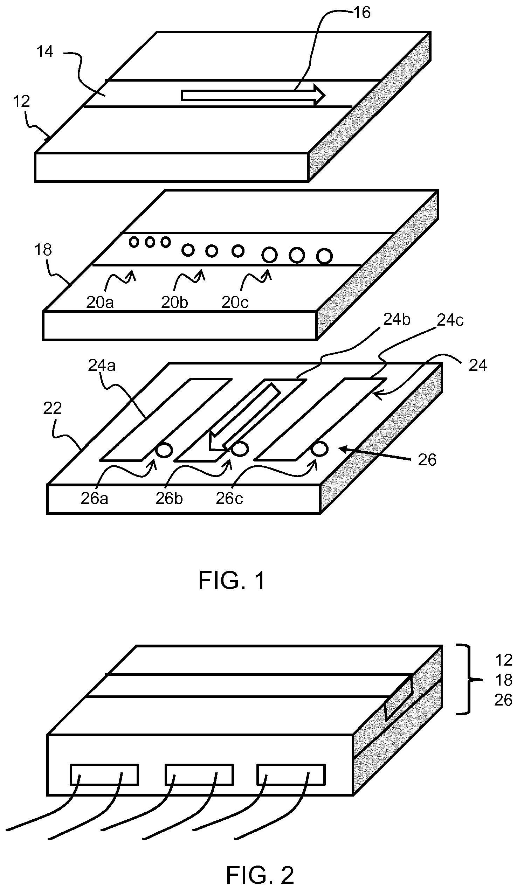

Figure 1 shows in exploded form a particle or pollen sensor 10. It is a microfluidic device comprising a layered structure.

A top layer 12 comprises a flow channel 14 for receiving a flow containing particles or pollen to be sensed. This flow is represented by arrow 16 and passes along the channel 14. Note that the flow channel may contain a liquid such as silicone oil with which a particulate gas (air) flow is mixed or dissolved, or it may contain a gas. The top layer 12 comprises a glass or plastic or metal or polymer layer with the channel formed on its (downward facing) surface.

A next layer comprises a size screening layer 18 adjacent the flow channel. It comprises plurality of size selection regions 20a, 20b, 20c. Each size selection region comprises an array of openings, wherein each region has openings of one size. Thus, each region allows particles up to a given size to pass through. The openings may form a regular array of circular openings, for example.

In one example there are three size selection regions. The first size selection region for example has openings having a size in the range 15 to 30$\mu$m, the second size selection region has openings having a size in the range 30 to 45$\mu$m and the third size selection region has openings having a size in the range 45 to 60$\mu$m. This provides one example of possible size ranges.

Note that the flow channel layer 12 and the size screening layer 18 may be formed as a single patterned layer.

A bottom layer comprises a detection channel arrangement 22 disposed adjacent the size screening layer for receiving particles which have passed through the size screening layer 18. In the example shown, there are three detection channels 24 perpendicular to the flow channel 14.

The bottom layer 22 may also comprise a glass or plastic or metal layer with the channel formed on its (upward facing) surface.

A particle detection arrangement 26 is provided for detecting particles in the detection channel arrangement at a plurality of detection locations 26a, 26b, 26c. Each detection location is associated with one of the plurality of size selection regions. As explained below, this is only one possible configuration.

The detection arrangement 26 for example comprises a pair of electrodes at opposite sides of each channel for measuring an electrical resistance across the channel. The electrodes may coat the inside of the channel. Alternatively, a separate optical detector unit for optical counting or an acoustic particle sensor may be used.

A particle size distribution can be obtained from the multiple detection signals, and this may be used to identify specific pollen types or specific other types of particle.

The layered structure may be formed by conventional photolithography and the layers may be bonded together by thermal treatment, plasma surface treatment or gluing and curing.

This sensor design provides particle screening to perform a pre-filtering function of a gas in the flow channel 24. The design is compact and makes use of microscale channels.

By way of example, the width of the flow channel 14 may be of the order of 50$\mu$m to 2000$\mu$m, and the height may be of the order of 50$\mu$m to 1000$\mu$m. The

thickness of the layer 12 is thus for example in the range 2mm to 50mm. The length of the channel is for example in the range 10mm to 100mm.

The width of the detection channels may be similar, for example of the order of 50$\mu$m to 2000$\mu$m, and the height of the order of 50$\mu$m to 1000$\mu$m. The length of the channel is for example in the range 10mm to 100mm.

The overall device is shown in Figure 2 in assembled form. It forms a block which may be mounted on a printed circuit board. It has linear dimensions of units or tens of mm, and a combined thickness of the order of mm, for example less than 5mm in height.

In a preferred example, the flow channel 14 is designed to implement particle size separation into different lateral regions of the flow channel (i.e. in a direction perpendicular to the general flow direction).

It is known that channels maybe designed to provide separation of particles of different sizes into different lanes. This is described in detail in "Label-free cell separation and sorting in microfluidic systems" of Daniel R. Gossett et. al., Anal Bioanal Chem (2010) 397:3249-3267. Particle (e.g. cell) size is used as a marker.

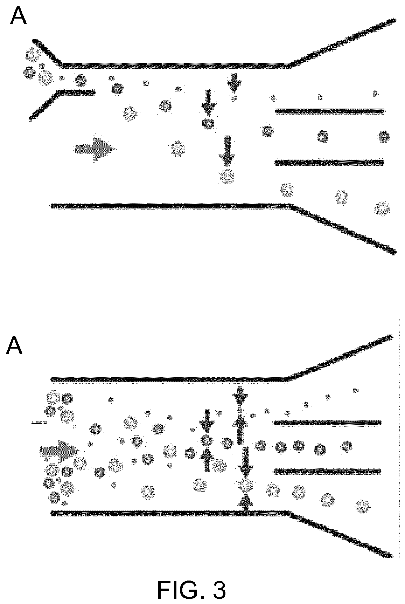

Figure 3A shows a kinetic flow approach wherein a transverse speed of particle motion depends on the particle size, so that different sizes of particles reach different lateral positions across the flow channel.

Figure 3B shows an equilibrium method in which the particles migrate to size-dependent equilibrium positions.

These figures are taken from the reference above.

The physics relating to this type of inertial particle separation process (in straight and curved channels) is described further in "Particle inertial focusing and its mechanism in a serpentine microchannel", of Jun Zhang et. al., of the Faculty of Engineering and Information Sciences, University of Wollongong, Australia.

Inertial migration is a phenomenon where randomly dispersed particles in the entrance of a straight channel migrate laterally to several cross-sectional equilibrium positions after a long enough distance. Two dominant forces are responsible for this phenomenon: the shear gradient lift force acting down the velocity gradient towards the channel walls, and a wall induced lift force directed towards the centerline of the channel. The balance of these two forces creates several equilibrium positions in the cross section. The net inertial lift force has been derived and simplified as:

$$F_L = \frac{f_L \rho_f U_m^2 a^4}{D_h^2}$$

$$Re_C = \frac{\rho_f U_m D_h}{\mu}$$

where $\rho_f$, $U_m$ and $\mu$ are the fluid density, maximum velocity and dynamic viscosity, respectively. Spherical particles have a diameter a. The hydraulic diameter $D_h$ of the channel is defined as $D_h = D$ for a circular channel (D is the diameter of the circular cross-section) or $D_h = 2wh/(w+h)$ for a rectangular channel (w and h correspond to width and height of the rectangular cross-section). The lift coefficient $f_L$ of the net inertial lift force is a function of the position of the particles within the cross-section of channel, channel Reynolds number Rec and particle size a. In a straight channel, the lateral migration velocity $U_L$ of the particle and the minimum channel length $L_{min}$, which is required for particles to migrate to their equilibrium positions, can be derived by balancing the net inertial lift force and Stokes drag.

Thus, the mechanism for particle separation using inertial forces is known. Indeed, inertial microfluidics has attracted a significant amount of attention in recent years, in particular in the field of lab-on-a-chip.

Note that this separation of particles into subchannels within the main flow channel is optional. The main flow channel may instead simply transport the particle mixture, all of which is exposed to each size selection region in turn. Different signal processing will then be required. The first size selection region will pass only the smallest particles, and a first proportion of the total number of smallest particles which are present (e.g. x, 0<x<1). The second size selection region will pass a second proportion of the medium sized particles (e.g. y, 0<y<1) as well as a third proportion (e.g. z, 0<z<1) of the remaining smallest particles. Thus the second detector reading will include a component based on the proportion y of medium sized particles as well as a proportion xz of the smallest particles. The same applies to subsequent size selection and particle detection. Knowledge of the sensor performance characteristics can be used to enable the individual particle counts to be

Returning to Figure 1, the different size selection regions 20a, 20b, 20c each have their array of openings arranged within a portion of the lateral width of the flow channel, to correspond to the inertial size migration that takes place in the flow channel. The smallest openings of the first size selection region 20a are arranged to one side, the mid-sized openings of the second size selection region 20b are arranged at the middle and the largest openings of the third size selection region 20c are arranged to the opposite side. As the flow passes over the size selection regions, particles of suitable size enter the detection channel arrangement through the size screening layer. This may be achieved by hydrophilic attraction of the particles through the size screening layer into the detection channel arrangement.

For this purpose, the detection channel and size screening layer arrangement has a hydrophilic coating or the material of the layer 22 is formed of a hydrophilic material and is filled with a water solution.

A hydrophilic bulk material could for example be a glass substrate in which micro channels are formed, or a polydimethylsiloxane (PDMS) body which is treated with a plasma to be hydrophilic. Alternatively, the surface of the micro channels may be chemically treated with an -OH group.

The size screening layer 18 may for example comprise a polycarbonate membrane or it may be formed using the same materials as the detection channel layer 22.

The water solution may comprise a salt to provide desired electrical characteristics and a low volume (e.g. 0.01%) of surfactant to prevent pollen attaching together.

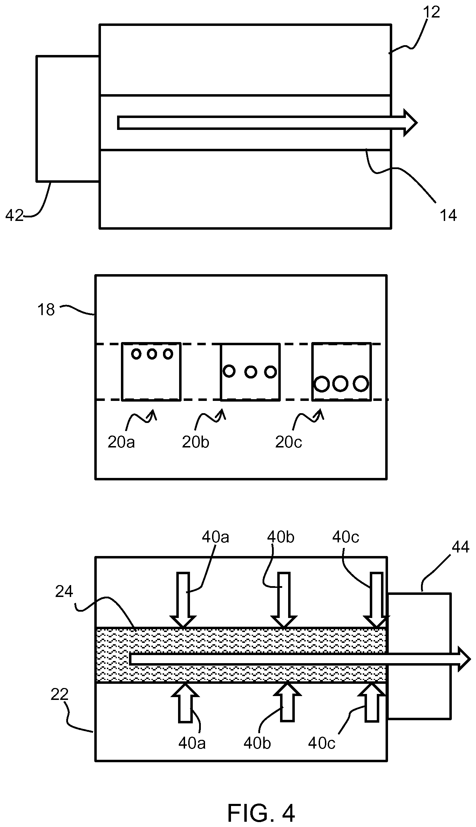

Figure 4 shows a variation to the arrangement of Figure 1 in more detail and shows the three layers 12, 18, 22. The detection channel arrangement comprises a single channel 24 which is parallel with the flow channel 14, and the particle detection arrangement comprises a set of detection units 40a, 40b, 40c disposed along the detection channel 14. Each detection unit will then measure a cumulative particle flow, and processing of the detection unit signals enables the different contributions to be derived. This provides a compact arrangement with a single detection channel 24.

Figure 4 shows a first microfluidic pump 42 for delivering a flow to the flow channel and a second microfluidic pump 44 for delivering a flow to the detection channel.

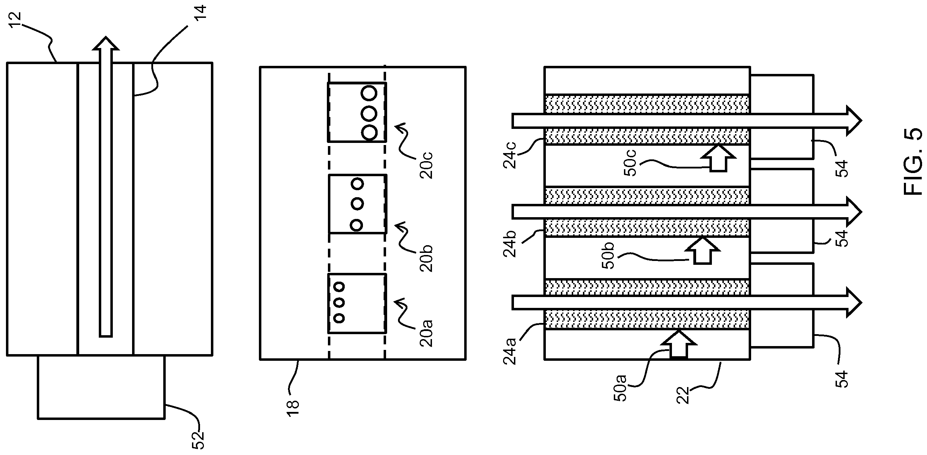

Figure 5 shows the arrangement of Figure 1 in more detail, in which the detection channel arrangement comprises the set of detection channels 24a, 24b, 24c, each extending across and in particular perpendicular to the flow channel. The particle detection arrangement comprises a detection unit 50a, 50b, 50c in each detection channel 14. Each detection channel then provides the independent measurement of a particle count for one range of particle sizes.

The detection channel arrangement may be filled with a solution and has a hydrophilic coating or is formed from a hydrophilic material, as mentioned above. The water solution attracts the particles from the flow channel through the size selection layer, so that the transfer of particles is essentially passive and relies on hydrophilic forces.

Figure 5 shows a first microfluidic pump 52 for delivering a flow to the flow channel and a set of second microfluidic pumps 54 for delivering a flow to each detection channel.

As mentioned above, the detection may be based on measuring current. The detection channel may comprise KCl solution (with a concentration 0.01 M - 0.001M).

The approach of using current measurement to perform particle detection and counting is explained in detail in "An electronic pollen detection method using Coulter counting principle", of Zheng Zhang et. al., Atmospheric Environment 39 (2005) 5446-5453.

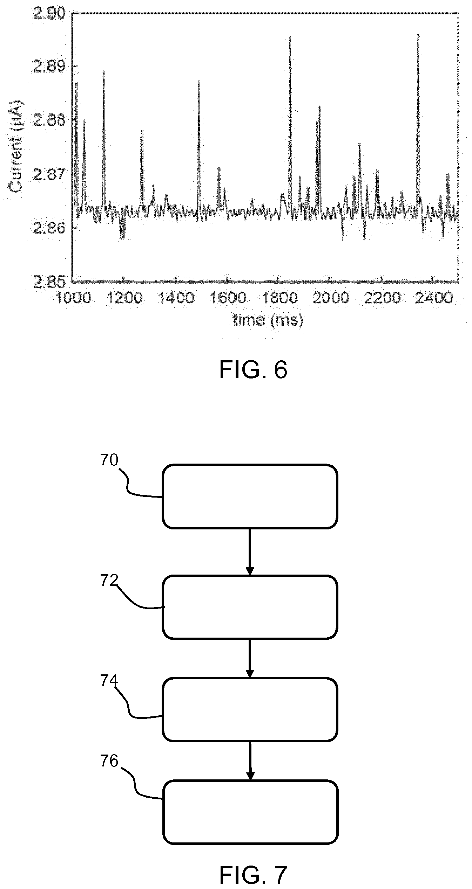

Figure 6 shows an example of detection signal when pollen passes through electrodes, which is taken from the reference above. It shows the current versus time. A difference of 0.03 μA is observed at each passage of a particle.

There are many different possible designs for the pump arrangements mentioned above. By way of example, in each case a syringe pump, an electro-osmotic pump, an acoustic pump or a rotary peristaltic micropump may be used. Micropumps are commercially available which can be integrated with microfluidic channels.

The flow channel 14 contains a liquid. To provide the gas sample into the liquid-containing channel, there is a sampling and mixing stage for mixing with a fluid carrier such as silicone oil or deionized water to provide the required air sampling.

The mixing stage for example comprises a fan or pump which provide a sample of air into an oil phase. The oil phase with trapped particles is then sucked into the flow channel 14. The hydrophilic pollen is then separated from the main stream and the waste is passed to a disposable syringe or a beaker by means of a pump.

In principle, it is possible for the flow channel to carry a gas flow, so avoiding the need for an air mixing stage. The detection sensitivity is however lower.

Figure 7 shows a particle or pollen sensing method comprising:

in step 70, receiving a flow containing particles or pollen to be sensed into a flow channel;
in step 72, performing size screening using a plurality of size selection regions of a size screening layer;
in step 74, receiving particles which have passed through the size screening layer in a detection channel arrangement; and
in step 76 detecting particles in the detection channel arrangement at a plurality of detection locations each associated with one of the plurality of size selection regions.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

**Claims**

1. A particle or pollen sensor comprising:

   a flow channel (14) for receiving a flow containing particles or pollen to be sensed;
   a size screening layer (18) disposed adjacent the flow channel and comprising a plurality of size selection regions;
   a detection channel arrangement (26) disposed adjacent the size screening layer for receiving particles which have passed through the size screening layer; and
   a particle detection arrangement for detecting particles in the detection channel arrangement at a plurality of detection locations each associated with one of the plurality of size selection regions.

2. A sensor as claimed in claim 1, comprising a microfluidic device.

3. A sensor as claimed in any preceding claim, wherein the size selection regions (20a, 20b, 20c) of the size screening layer are disposed along the direction of the flow channel and each comprise an array of openings.

4. A sensor as claimed in any preceding claim, wherein the flow channel implements (14) particle size separation into different lateral regions of the flow channel.

5. A sensor as claimed in claim 4, wherein the openings of one size selection region (20a, 20b, 20c) are laterally offset with respect to the openings of each other size selection region.

6. A sensor as claimed in any preceding claim, wherein the detection channel arrangement (22) comprises a single channel (24) which is parallel with the flow channel (14), and the particle detection arrangement comprises a set of detection units (40a, 40b, 40c) disposed along the detection channel.

7. A sensor as claimed in any one of claims 1 to 5, wherein the detection channel arrangement comprises a set of detection channels (24a, 24b, 24c), each extending across the flow channel, and the particle detection arrangement comprises a detection unit (50a, 50b, 50c) in each detection channel.

8. A sensor as claimed in any preceding claim, wherein the detection channel arrangement is filled with a water solution and has a hydrophilic coating.

9. A sensor as claimed in claim 8, wherein the water solution comprises a surfactant.

**10.** A sensor as claimed in any preceding claim, wherein the size selection regions comprise:

a first size selection region (20a) with openings having a size in the range 15 to 30$\mu$m;
a second size selection region (20b) with openings having a size in the range 30 to 45$\mu$m; and
a third size selection region (20c) with openings having a size in the range 45 to 60$\mu$m.

**11.** A sensor as claimed in any preceding claim, further comprising a pump (52) for drawing gas along the flow channel.

**12.** A sensor as claimed in any preceding claim, further comprising a pump (54) for drawing fluid along the detection channel arrangement.

**13.** A sensor as claimed in any preceding claim, wherein the particle detection arrangement comprises a resistance measurement arrangement for detecting a change in resistance when a particle passes the particle detection arrangement.

**14.** A sensor as claimed in any one of claims 1 to 12, wherein the particle detection arrangement comprises an optical detection arrangement.

**15.** A particle or pollen sensing method comprising:

(70) receiving a flow containing particles or pollen to be sensed in a flow channel;
(72) performing size screening using a plurality of size selection regions of a size screening layer;
(74) receiving particles which have passed through the size screening layer in a detection channel arrangement; and
(76) detecting particles in the detection channel arrangement at a plurality of detection locations each associated with one of the plurality of size selection regions.

FIG. 1

FIG. 2

FIG. 3

FIG. 4

FIG. 5

FIG. 6

FIG. 7

Europäisches
Patentamt

European
Patent Office

Office européen
des brevets

**EUROPEAN SEARCH REPORT**

Application Number

EP 18 17 7020

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/135663 A2 (UNIV SOUTH FLORIDA [US]; GULDIKEN RASIM OYTUN [US]; JO MYEONG CHAN [US] 4 October 2012 (2012-10-04) | 1,2,7-15 | INV. G01N1/22 G01N15/02 B01L3/00 G01N1/40 |
| Y | * page 46, line 5 - page 55, line 9; figures 4.1 - 4.12 * | 3-6 | |
| Y | WO 2013/048323 A1 (ACOUSORT AB [SE]; LAURELL THOMAS [SE]; GRENVALL CARL [SE]; MAGNUSSON C) 4 April 2013 (2013-04-04) * page 9, line 26 - page 11, line 12; figure 7 * | 3-6 | |
| A | WO 2014/070776 A1 (UNIV MICHIGAN [US]) 8 May 2014 (2014-05-08) * paragraphs [0043], [0069] * * paragraphs [0086] - [0088] * | 1-15 | |

TECHNICAL FIELDS
SEARCHED      (IPC)

G01N
B01L

The present search report has been drawn up for all claims

| Place of search | Date of completion of the search | Examiner |
|---|---|---|
| The Hague | 5 December 2018 | Bamière, François |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 17 7020

This annex lists the patent family members relating to the patent documents cited in  the above-mentioned European search report.
The members are as contained in the European Patent Office EDP file on
The European Patent Office is in no way liable for these particulars which are merely given for the purpose of information.

05-12-2018

| Patent document cited in search report | | | Publication date | Patent family member(s) | | | Publication date |
|---|---|---|---|---|---|---|---|
| WO 2012135663 | A2 | | 04-10-2012 | US | 2014008307 | A1 | 09-01-2014 |
| | | | | WO | 2012135663 | A2 | 04-10-2012 |
| WO 2013048323 | A1 | | 04-04-2013 | EP | 2761291 | A1 | 06-08-2014 |
| | | | | JP | 6203733 | B2 | 27-09-2017 |
| | | | | JP | 2014528089 | A | 23-10-2014 |
| | | | | KR | 20140076590 | A | 20-06-2014 |
| | | | | US | 2014231315 | A1 | 21-08-2014 |
| | | | | WO | 2013048323 | A1 | 04-04-2013 |
| WO 2014070776 | A1 | | 08-05-2014 | US | 2015293010 | A1 | 15-10-2015 |
| | | | | WO | 2014070776 | A1 | 08-05-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DANIEL R. GOSSETT.** Label-free cell separation and sorting in microfluidic systems. *Anal Bioanal Chem,* 2010, vol. 397, 3249-3267
- Particle inertial focusing and its mechanism in a serpentine microchannel. **JUN ZHANG.** Faculty of Engineering and Information Sciences. University of Wollongong
- **ZHENG ZHANG.** An electronic pollen detection method using Coulter counting principle. *Atmospheric Environment,* 2005, vol. 39, 5446-5453